# EUROPEAN PATENT SPECIFICATION

(11) **EP 4 442 432 B1**
(45) Date of publication and mention of the grant of the patent: **05.11.2025**
(21) Application number: 24020106.1
(22) Date of filing: 04.04.2024
(51) Int. Cl.: B29C 57/04, B29D 23/00

(54) **MANUAL DEVICE FOR FLARING THERMOPLASTIC TUBES**
HANDGERÄT ZUM AUFBÖRDELN VON THERMOPLASTISCHEN ROHREN
DISPOSITIF MANUEL D'ÉVASAGE DE TUBES THERMOPLASTIQUES

(30) Priority: 06.04.2023 ES 202330287
(43) Date of publication of application: 09.10.2024
(73) Proprietor: Peris Presencia, José Francisco, 46610 Guadassuar, Valencia (ES)
(72) Inventor: Peris Presencia, José Francisco, 46610 Guadassuar, Valencia (ES)
(74) Representative: De Castro Hermida, José Luis

(56) References cited:
- CN-A- 109 383 012
- CN-U- 210 940 437
- CN-U- 218 557 951

## Description

Manual device for flaring thermoplastic tubes with several curved side plates that, through an assembly of central axis, central forks, side forks and connecting rods, form a set of hinges that transforms the axial displacement of the central axis into a lateral movement of perpendicular opening and closing of the curved side plates, providing the device with a closed position forming a hollow cylindrical element with a minimum diameter, of ideal dimensions for insertion inside the end of the tube without flaring, and an open position of the curved side plates forming a hollow cylindrical element with a maximum diameter, of ideal dimensions to achieve the flaring of the end of the tube quickly and accurately, with great repeatability and precision in the results that subsequently allow a perfect subsequent connection with another tube, both on site, in the factory or in the workshop.

### FIELD OF THE ART

The invention falls within the field of hand tools or devices intended for flaring tubes made of thermoplastic materials, for example PVC and similar, in construction, plumbing, etc.

### BACKGROUND OF THE INVENTION

Flaring is a process of widening the mouth of a tube to make it suitable for the end of another tube to enter inside and make a secure connection between both of them. The current state of the art for flaring consists, on the one hand, of flaring machines, or based on machines such as mandrels, such as those described in ES2237665 "Herramienta abocardadora para abocardar extremos de tubo, asi como aparato de prensado con una herramienta abocardadora", JPS58173035A "Flaring method of tube end" and WO0074926A1 "Pipe belling process". These machines achieve a precise result, but they are large, bulky, and complex devices to operate, difficult to use locally on a construction site or installation. Furthermore, its economic cost is relatively high, which means it is not easily amortizable for an average technician.

Some manual devices are also known, such as those described in Spanish Utility Model application U9400482 "Útil para el abocardado de tubos de plástico y similares", Spanish Utility Model application U200701000 "Abocardador portátil manual para tuberia de PVC", ES1028479U "Cuerpo abocardador", US4127021A "Tube flaring set" and ES0225116 "Abocardador perfeccionado" but they are devices with poor precision, difficult to operate, and with which it is almost impossible to achieve reliable and repetitive results, so it is common that the dispersion of measurements causes subsequent problems, such as waste of pieces of tube, joint leaks or even subsequent joint breaks. Furthermore, its operation in many cases is slow and cumbersome, especially when it has to be done on-site at a construction site or in an installation.

Chinese utility model CN218557951U is considered the closest prior art. It discloses a "Plastic pipe fitting flaring device" with side plates that are pushed apart by several connecting rods when a central axis is moved. It does allow for the flaring of the pipe, but its accuracy can be improved.

Other devices are found in CN210940437 U and CN109383012 A. CN210940437 U shows a device with some similarities with CN218557951U , where a central axis pushes side plates. CN109383012 uses an auger mechanism for the opening of each side plate.

### EXPLANATION OF THE INVENTION

In order to solve the technical problem of manual flaring of tubes quickly and accurately, both on site and in the factory, this invention is presented, which consists of a manual device for flaring thermoplastic tubes, comprising:
- a plurality of curved side plates, preferably three, capable of forming a hollow cylindrical element, terminated at one end in a chamfer, provided integrally on their inner face with one or more side forks,
- a central axis longitudinally arranged inside the hollow cylindrical element and emerging from the end opposite the chamfer, provided with at least two central forks integral with the central axis at different lengths of said central axis,
- a plurality of connecting rods that link, by means of two axes of rotation in each connecting rod, the side forks of the curved side plates with the central forks integral with the central axis,
- a connecting star, provided with an arm for each existing curved side plate, provided with a central borehole for the passage and movement of the central axis, and whose external ends of the arms emerge through slots appropriately arranged in the curved side plates and with an appropriate size to allow the displacement of the curved side plates with respect to the arms of the connecting star, this connecting star being located near the end opposite to the chamfers of the curved side plates, in such a way that the central forks integral with the central axis remain inside the cylinder formed by the curved side plates, below the connecting star,
- an axial displacement stop integral with the central axis, located above the connecting star,
the central axis being capable of axial displacement following the height of the cylinder formed by the curved side plates, this displacement being limited by the contact of the stop, or the central fork located the closest to the connecting star, with said connecting star.

The assembly of the central axis with the central forks, the side forks of the curved side plates, and the connecting rods that link them through the axes of rotation form a set of hinges that transforms the axial displacement of the central axis into a lateral movement of opening and perpendicular closure of the curved side plates.

Thus, the manual device for flaring thermoplastic tubes has a closed position forming a hollow cylindrical element with a minimum diameter, of ideal dimensions for insertion inside the end of the tube without flaring, and an open position of the curved side plates forming an element hollow cylindrical with a maximum diameter, of ideal dimensions to achieve the flaring of the end of the tube.

It is provided that the central axis will have, at its outer end, a solid handle, to allow more comfortable handling by the operator.

This manual thermoplastic tube flaring device involves a characteristic thermoplastic tube flaring method, comprising:
- a first step of heating the end of the tube,
- a second step of inserting the device in the closed position, until the end of the tube abuts against the ends of the connecting star,
- a third expansion step, wherein the central axis continues to be pushed, causing the curved side plates to go from closed position to open position, with their corresponding expansion outwards, deforming the end of the tube softened by heat,
- a fourth closing step, wherein the central axis is pulled outwards, causing the curved side plates to go from open position to closed position, with their corresponding decrease in diameter, and
- a fifth extraction step, wherein the central axis continues to be pulled outwards, dragging the device outside the flared end of the tube, leaving it ready for another cycle.

This invention presents the following advantages in relation to the prior art:
- allows manual flaring of thermoplastic tubes quickly and accurately, with great repeatability in the results,
- can be perfectly adjusted for operation with the most common tube diameters,
- eliminates the frequent dimensional errors common in other manual devices, which frequently force part of the incorrectly flared material to be discarded, with the consequent economic waste,
- achieves flares with great precision and adjustment that subsequently allow a perfect subsequent connection with another tube, minimizing possible breakdowns or leaks during operation,
- flaring using this device can be carried out either on site, in a factory or in a workshop,
- does not require expensive and bulky machinery to operate,
- its operation is simple and intuitive, with hardly any need for preliminary training,
- simple, economical, and reliable construction, and
- easy maintenance and repair,

### BRIEF DESCRIPTION OF THE DRAWINGS

To complement the description that is being made and in order to help a better understanding of the characteristics of the invention, a set of drawings is attached as an integral part of said description, wherein, with an illustrative and non-limiting nature, the following has been represented:

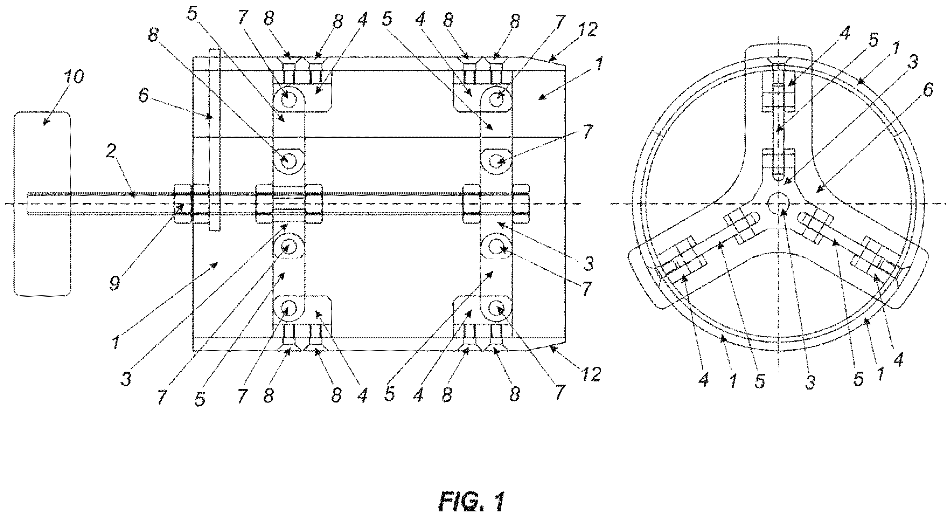

Figure 1.- Shows side and front sectional views of the device of the invention, showing its main internal elements, in the preferred embodiment of three side plates.

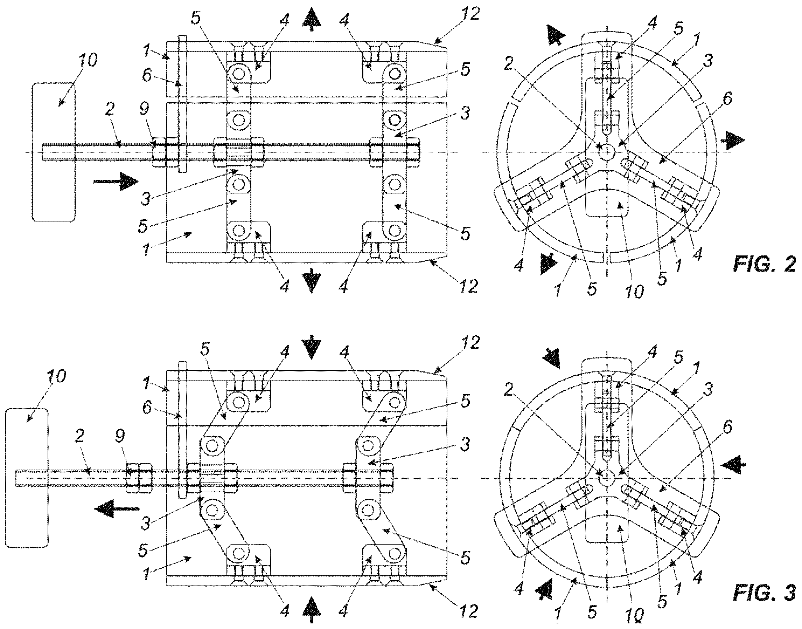

Figure 2.- Shows side and front sectional views of the device of the invention, in the open position of the curved plates, showing its main internal elements, in the preferred embodiment of three side plates.
Figure 3.- Shows side and front sectional views of the device of the invention, in the closed position of the curved plates, showing its main internal elements, in the preferred embodiment of three side plates.

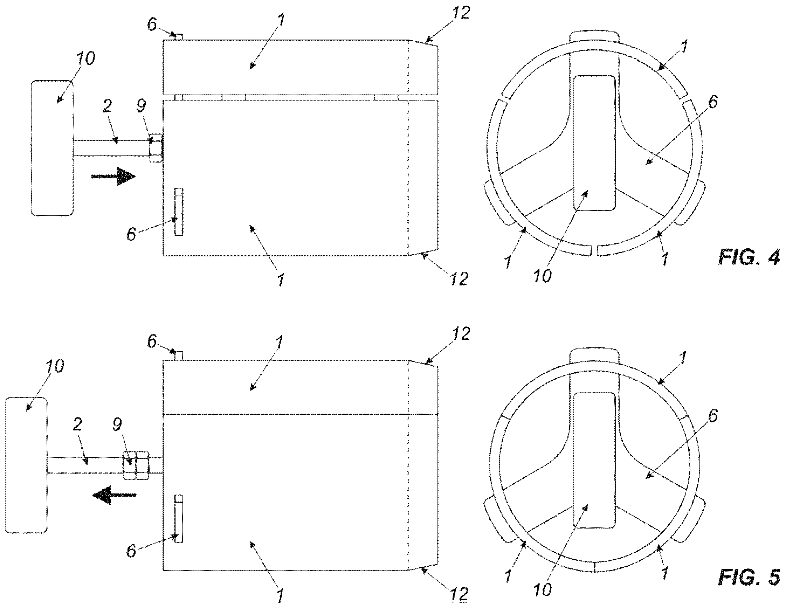

Figure 4.- Shows exterior side and front views of the device of the invention, in the open position of the curved plates, in the preferred embodiment of three side plates.
Figure 5.- Shows exterior side and front views of the device of the invention, in the closed position of the curved plates, in the preferred embodiment of three side plates.

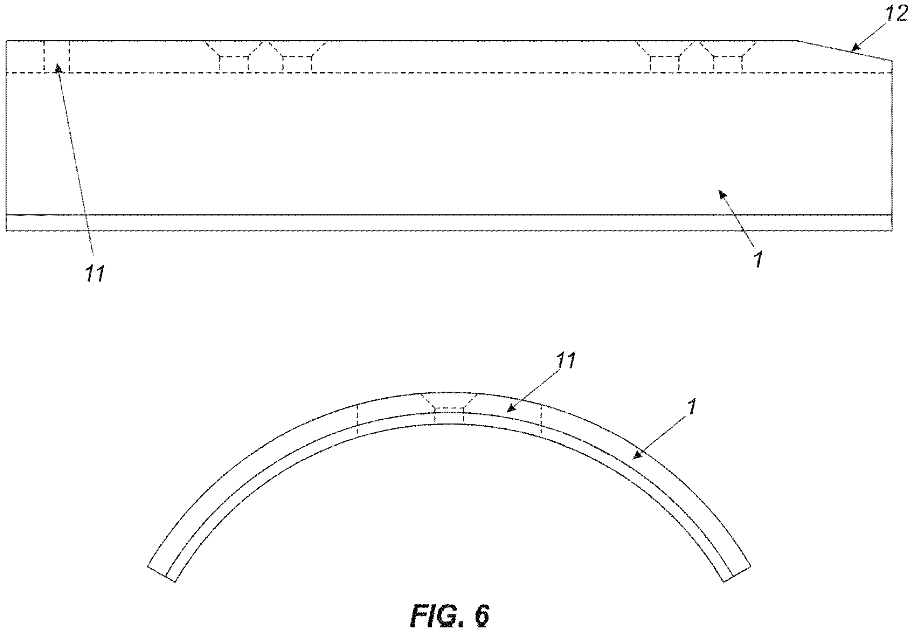

Figure 6.- Shows side and front views of a side plate, in the preferred embodiment of three side plates.

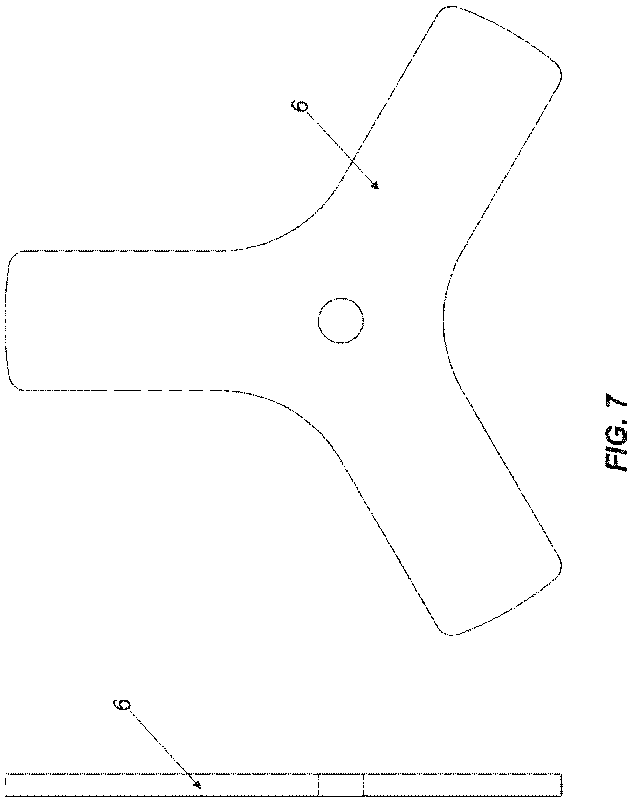

Figure 7.- Shows side and front views of a three-arm connecting star, in the preferred embodiment of three side plates.

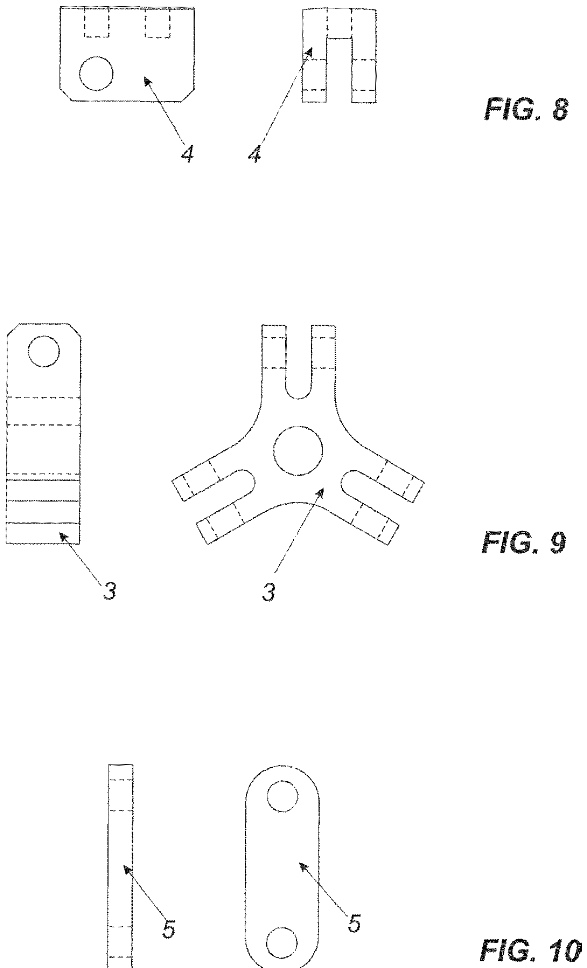

Figure 8.- Shows side and front views of a side fork.
Figure 9.- Shows side and front views of a three-arm central fork, in the preferred embodiment of three side plates.
Figure 10.- Shows side and front views of a connecting rod.

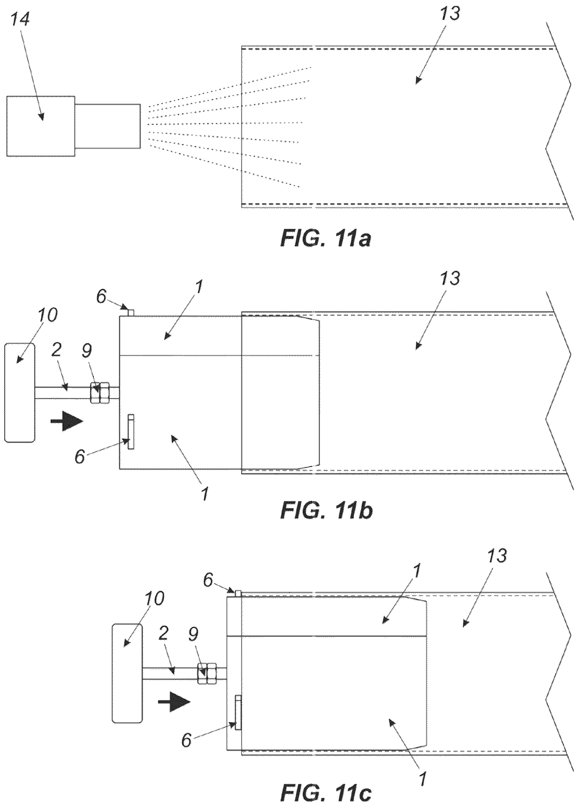

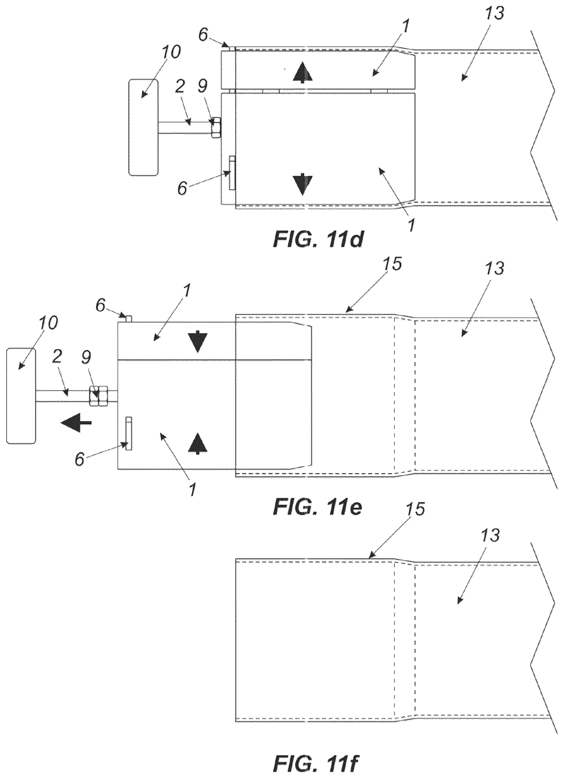

Figures 11 illustrate in a complementary way the method for flaring thermoplastic tubes with the device of the invention. Namely:
   Figure 11a.- Shows the first step of heating the end of the tube using a heating device.
   Figure 11b.- Shows the second step of insertion of the device in the closed position of the curved side plates inside the end of the tube,
   Figure 11c.- Shows the end of the second step of inserting the device in the closed position inside the end of the tube, when the end of the tube abuts against the ends of the connecting star.
   Figure 11d.- Shows the third expansion step of the device, causing the curved side plates to go from closed position to open position.
   Figure 11e.- Shows the fourth closing step and the fifth extraction step.
   Figure 11f.- Shows the tube with the flared end that is obtained as a result.

### PREFERRED EMBODIMENT OF THE INVENTION

The characteristics of the presented invention will be better understood with the following preferred embodiment, which, in view of the drawings, we can see that it comprises
- a plurality of curved side plates (1) capable of forming a hollow cylindrical element, terminated at one end in a chamfer (12), provided integrally on their inner face with one or more side forks (4),
- a central axis (2) longitudinally arranged inside the hollow cylindrical element and emerging from the end opposite the chamfer, provided with at least two central forks (3) integral with the central axis (2) at different lengths of said central axis,
- a plurality of connecting rods (5) that link, by means of two axes of rotation (7) in each connecting rod (5), the side forks (4) of the curved side plates (1) with the central forks (3) integral with the central axis (2),
- a connecting star (6), provided with an arm for each existing curved side plate (1), provided with a central borehole for the passage and movement of the central axis (2), and whose external ends of the arms emerge through slots (11) appropriately arranged in the curved side plates (1) and with an appropriate size to allow the displacement of the curved side plates (1) with respect to the arms of the connecting star (6), this connecting star (6) being located near the end opposite to the chamfers (12) of the curved side plates (1), in such a way that the central forks (3) integral with the central axis (2) remain inside the cylinder formed by the curved side plates (1), below the connecting star (6),
- an axial displacement stop (9) integral with the central axis (2), located above the connecting star (6),
the central axis (2) being capable of axial displacement following the height of the cylinder formed by the curved side plates (1), this displacement being limited by the contact of the stop (9) or the central fork (3) located the closest to the connecting star (6), with said connecting star (6).

The assembly of the central axis (2) with the central forks (3), the side forks (4) of the curved side plates (1), and the connecting rods (5) that link them through the axes of rotation (7) form a set of hinges that transforms the axial displacement of the central axis (2) into a lateral movement of perpendicular opening and closing of the curved side plates (1).

In a preferred embodiment, the number of curved side plates (1) is three.

The manual device for flaring thermoplastic tubes has a closed position of the curved side plates (1), wherein the central axis (2) is offset outwards, so that the central fork (3) located closer to the connecting star (6) comes into contact with said connecting star (6), and the central forks (3), through the connecting rods (5) that link them, drag the side forks (4) to a position closer to the central axis (2), causing the curved side plates (1) to close together inwards, forming a hollow cylindrical element with a minimum diameter, of ideal dimensions for insertion inside of the end of the tube (13) without flaring.

It also has an open position of the curved side plates (1), the central axis (2) is offset inwards, so that the stop (9) comes into contact with the connecting star (6), and the central forks (3), through the connecting rods (5) that link them, drag the side forks (4) to a position away from the central axis (2), causing the curved side plates (1) to open together outwards, forming a hollow cylindrical element with a maximum diameter, of ideal dimensions to achieve the flared end (15) of the end of the tube (13).

The joints between the curved side plates (1) and the side forks (4) are made using conventional mechanical fastenings (8), such as screws, rivets or the like, or alternatively they can be made by welding.

In a preferred embodiment, the joints between the central axis (2), the central forks (3) and the stop (9) have an adjustable position along the central axis (2), achieved by combining a threaded rod such as central axis (2) and nuts as a stop (9) and as fastening of the central forks (3). In this way the operation can be adapted to different tube thicknesses. An alternative embodiment is also provided wherein the joints between the central axis (2), the central forks (3) and the stop (9) are fixed.

It is also provided that the central axis (2) has, at its outer end, an integral handle (10), to allow more comfortable handling by the operator.

This manual thermoplastic tube flaring device involves a characteristic thermoplastic tube flaring method, comprising
- a first step of heating the end of the tube (13) using a heating device (14), for example a gas torch, electric resistance, heat gun, fan heater, etc.
- a second step of inserting the manual device for flaring thermoplastic tubes, in the closed position of the curved side plates (1), inside the end of the tube (13), until the end of the tube (13) abuts against the ends of the connecting star (6) that extend outside the curved side plates (1) through the slots (11),
- a third expansion step, wherein the central axis (2) continues to be pushed, using the handle (10) if applicable, until the stop (9) comes into contact with the connecting star (6), causing the curved side plates (1) to go from closed position to open position, with their corresponding expansion outwards,
- a fourth closing step, wherein the central axis (2) is pulled outwards, using the handle (10) if applicable, until the central fork (3) located the closest to the connecting star (6) comes into contact with said connecting star (6), causing the curved side plates (1) to go from open position to closed position, with their corresponding decrease in diameter, and
- a fifth extraction step, wherein the central axis (2) continues to be pulled outwards, using the handle (10) if applicable, dragging the manual device for flaring thermoplastic tubes outside the flared end (15) of the tube (13), leaving it ready for another cycle.

Complementarily and simultaneously to any of the previous steps, it may comprise an additional heating step of the outside of the end of the tube (13) by means of a heating device (14).

The industrial application of this invention arises evidently from its description.

## Claims

1. A manual device for flaring thermoplastic tubes **comprising:**
- a plurality of curved side plates (1) capable of forming a hollow cylindrical element, terminated at one end in a chamfer (12), provided integrally on their inner face with one or more side forks (4),
- a central axis (2) longitudinally arranged inside the hollow cylindrical element and emerging from the end opposite the chamfer, provided with at least two central forks (3) integral with the central axis (2) at different lengths of said central axis,
- a plurality of connecting rods (5) that link, by means of two axes of rotation (7) in each connecting rod (5), the side forks (4) of the curved side plates (1) with the central forks (3) integral with the central axis (2),
- a connecting star (6), provided with an arm for each existing curved side plate (1), provided with a central borehole for the passage and movement of the central axis (2), and whose external ends of the arms emerge through slots (11) appropriately arranged in the curved side plates (1) and with an appropriate size to allow the displacement of the curved side plates (1) with respect to the arms of the connecting star (6), this connecting star (6) being located near the end opposite to the chamfers (12) of the curved side plates (1), in such a way that the central forks (3) integral with the central axis (2) remain inside the cylinder formed by the curved side plates (1), below the connecting star (6),
- an axial displacement stop (9) integral with the central axis (2), located above the connecting star (6),
the central axis (2) being capable of axial displacement following the height of the cylinder formed by the curved side plates (1), this displacement being limited by the contact of the stop (9) or the central fork (3) located the closest to the connecting star (6), with said connecting star (6).

2. The manual device for flaring thermoplastic tubes according to claim 1, **wherein** the number of curved side plates (1) is three.

3. The manual device for flaring thermoplastic tubes according to any of the preceding claims, **wherein,** in a closed position of the curved side plates (1), the central axis (2) is offset outwards, so that the central fork (3) located closer to the connecting star (6) comes into contact with said connecting star (6), and the central forks (3), through the connecting rods (5) that link them, drag the side forks (4) to a position closer to the central axis (2), causing the curved side plates (1) to close together inwards, forming a hollow cylindrical element with a minimum diameter, of ideal dimensions for insertion inside of the end of the tube (13) without flaring.

4. The manual device for flaring thermoplastic tubes according to any of claims 1 and 2, **wherein,** in an open position of the curved side plates (1), the central axis (2) is offset inwards, so that the stop (9) comes into contact with the connecting star (6), and the central forks (3), through the connecting rods (5) that link them, drag the side forks (4) to a position away from the central axis (2), causing the curved side plates (1) to open together outwards, forming a hollow cylindrical element with a maximum diameter, of ideal dimensions to achieve the flared end (15) of the end of the tube (13).

5. The manual device for flaring thermoplastic tubes according to any of the preceding claims, **wherein** the joints between the curved side plates (1) and the side forks (4) are made using conventional mechanical fastenings (8).

6. The manual device for flaring thermoplastic tubes according to any of claims 1 to 4, **wherein** the joints between the curved side plates (1) and the side forks (4) are made by welding.

7. The manual device for flaring thermoplastic tubes according to any of the preceding claims, **wherein** the joints between the central axis (2), the central forks (3) and the stop (9) have an adjustable position along the central axis (2).

8. The manual device for flaring thermoplastic tubes according to any of claims 1 to 6, **wherein** the joints between the central axis (2), the central forks (3) and the stop (9) are fixed.

9. The manual device for flaring thermoplastic tubes according to any of the previous claims, **wherein** the central axis (2) has, at its outer end, an integral handle (10).

10. A method for flaring thermoplastic tubes with a manual device for flaring thermoplastic tubes according to any of the preceding claims, **comprising**
- a first step of heating the end of the tube (13) using a heating device (14),
- a second step of inserting the manual device for flaring thermoplastic tubes, in the closed position of the curved side plates (1), inside the end of the tube (13), until the end of the tube (13) abuts against the ends of the connecting star (6) that extend outside the curved side plates (1) through the slots (11),
- a third expansion step, wherein the central axis (2) continues to be pushed, using the handle (10) if applicable, until the stop (9) comes into contact with the connecting star (6), causing the curved side plates (1) to go from closed position to open position, with their corresponding expansion outwards,
- a fourth closing step, wherein the central axis (2) is pulled outwards, using the handle (10) if applicable, until the central fork (3) located the closest to the connecting star (6) comes into contact with said connecting star (6), causing the curved side plates (1) to go from open position to closed position, with their corresponding decrease in diameter, and
- a fifth extraction step, wherein the central axis (2) continues to be pulled outwards, using the handle (10) if applicable, dragging the manual device for flaring thermoplastic tubes outside the flared end (15) of the tube (13), leaving it ready for another cycle.

11. The thermoplastic tube flaring method according to claim 10, comprising, complementarily and simultaneously to any of the previous steps, an additional heating step of the exterior of the end of the tube (13) by means of a heating device (14).

## Patentansprüche

1. Handgerät zum Aufweiten von thermoplastischen Rohren, **umfassend:**
- eine Vielzahl von gekrümmter Seitenplatten (1), die ein hohles zylindrisches Element bilden können, das an einem Ende in einer Abschrägung (12) endet und auf seiner Innenseite integral mit einer oder mehreren Seitengabeln (4) versehen ist,
- eine Mittelachse (2), die in Längsrichtung im Inneren des hohlen zylindrischen Elements angeordnet ist und aus dem der Abschrägung gegenüberliegenden Ende austritt, und die mit mindestens zwei Mittelgabeln (3) versehen ist, die mit der Mittelachse (2) auf unterschiedlichen Längen der Mittelachse fest verbunden sind,
- eine Vielzahl von Pleuelstangen (5), die über zwei Drehachsen (7) in jeder Pleuelstange (5) die Seitengabeln (4) der gekrümmten Seitenplatten (1) mit den mit der Mittelachse (2) verbundenen Mittelgabeln (3) verbinden,
- einen Verbindungsstern (6), der mit einem Arm für jede vorhandene gekrümmte Seitenplatte (1) versehen ist, der mit einer zentralen Bohrung für den Durchgang und die Bewegung der Mittelachse (2) versehen ist und dessen äußere Enden der Arme durch Schlitze (11) hervortreten, die entsprechend in den gekrümmten Seitenplatten (1) angeordnet sind und eine geeignete Größe aufweisen, um die Verschiebung der gekrümmten Seitenplatten (1) in Bezug auf die Arme des Verbindungssterns (6) zu ermöglichen, wobei dieser Verbindungsstern (6) nahe dem Ende gegenüber den Abschrägungen (12) der gekrümmten Seitenplatten (1) angeordnet ist, sodass die mit der Mittelachse (2) verbundenen Mittelgabeln (3) innerhalb des von den gekrümmten Seitenplatten (1) gebildeten Zylinders unterhalb des Verbindungssterns (6) verbleiben,
- einem axialen Verschiebungsanschlag (9), der mit der Mittelachse (2) fest verbunden ist und sich oberhalb des Verbindungssterns (6) befindet,
wobei die Mittelachse (2) in der Lage ist, sich axial entlang der Höhe des durch die gekrümmten Seitenplatten (1) gebildeten Zylinders zu verschieben, wobei diese Verschiebung durch den Kontakt des Anschlags (9) bzw. der näher am Verbindungsstern (6) liegenden Mittelgabel (3) mit dem Verbindungsstern (6) begrenzt wird.

2. Handgerät zum Aufweiten von thermoplastischen Rohren nach Anspruch 1, **wobei** die Anzahl der gekrümmten Seitenplatten (1) drei beträgt.

3. Handgerät zum Aufweiten von thermoplastischen Rohren nach einem der vorhergehenden Ansprüche, **wobei** in geschlossener Position der gekrümmten Seitenplatten (1) die Mittelachse (2) nach außen versetzt ist, sodass die näher am Verbindungsstern (6) angeordnete Mittelgabel (3) mit dem Verbindungsstern (6) in Kontakt kommt und die Verbindungssterne (6) über die sie verbindenden Pleuelstangen (5) die Seitengabeln (4) in eine Position näher an der Mittelachse (2) ziehen, wodurch die gekrümmten Seitenplatten (1) nach innen hin miteinander geschlossen werden und wodurch die gekrümmten Seitenplatten (1) nach innen zusammengeschoben werden und ein hohles zylindrisches Element mit minimalem Durchmesser und idealen Abmessungen zum Einführen in das Ende des Rohrs (13) ohne Aufweiten bilden.

4. Handgerät zum Aufweiten von thermoplastischen Rohren nach einem der Ansprüche 1 und 2, **wobei** in einer offenen Position der gekrümmten Seitenplatten (1) die Mittelachse (2) nach innen versetzt ist, sodass der Anschlag (9) mit dem Verbindungsstern (6) in Kontakt kommt und die Mittelgabeln (3) mittels der Pleuelstangen (5), die sie verbinden, die Seitengabeln (4) in eine von der Mittelachse (2) entfernte Position ziehen, wodurch die gekrümmten Seitenplatten (1) sich nach außen miteinander öffnen und ein hohles zylindrisches Element mit einem maximalen Durchmesser und idealen Abmessungen bilden, um das aufgeweitete Ende (15) des Endes des Rohrs (13) zu erreichen.

5. Handgerät zum Aufweiten von thermoplastischen Rohren nach einem der vorhergehenden Ansprüche, **wobei** die Verbindungen zwischen den gekrümmten Seitenplatten (1) und den Seitengabeln (4) unter Verwendung herkömmlicher mechanischer Befestigungen (8) hergestellt sind.

6. Handgerät zum Aufweiten von thermoplastischen Rohren nach einem der Ansprüche 1 bis 4, **wobei** die Verbindungen zwischen den gekrümmten Seitenplatten (1) und den Seitengabeln (4) durch Schweißen hergestellt sind.

7. Handgerät zum Aufweiten von thermoplastischen Rohren nach einem der vorhergehenden Ansprüche, **wobei** die Verbindungen zwischen der Mittelachse (2), den Mittelgabeln (3) und dem Anschlag (9) eine einstellbare Position entlang der Mittelachse (2) aufweisen.

8. Handgerät zum Aufweiten von thermoplastischen Rohren nach einem der Ansprüche 1 bis 6, **wobei** die Verbindungen zwischen der Mittelachse (2), den Mittelgabeln (3) und dem Anschlag (9) fest sind.

9. Handgerät zum Aufweiten thermoplastischer Rohre nach einem der vorhergehenden Ansprüche, **wobei** die Mittelachse (2) an ihrem äußeren Ende einen integrierten Griff (10) aufweist.

10. Verfahren zum Aufweiten thermoplastischer Rohre mit einem Handgerät zum Aufweiten thermoplastischer Rohre nach einem der vorhergehenden Ansprüche, **umfassend**
- einen ersten Schritt des Erhitzens des Endes des Rohrs (13) mit einer Heizvorrichtung (14),
- einen zweiten Schritt des Einführens des Handgerätes zum Aufweiten thermoplastischer Rohre in der geschlossenen Position der gekrümmten Seitenplatten (1) in das Ende des Rohrs (13), bis das Ende des Rohrs (13) an den Enden des Verbindungssterns (6) anliegt, die sich außerhalb der gekrümmten Seitenplatten (1) durch die Schlitze (11) erstrecken,
- einen dritten Expansionsschritt, wobei die Mittelachse (2) gegebenenfalls mit dem Griff (10) weitergeschoben wird, bis der Anschlag (9) am Verbindungsstern (6) anschlägt, wodurch die gekrümmten Seitenplatten (1) von der geschlossenen in die geöffnete Position gelangen und sich entsprechend nach außen ausdehnen,
- einen vierten Schließschritt, wobei die Mittelachse (2) gegebenenfalls mit dem Griff (10) nach außen gezogen wird, bis die dem Verbindungsstern (6) am nächsten gelegene Mittelgabel (3) mit diesem in Kontakt kommt, wodurch die gekrümmten Seitenplatten (1) von der offenen in die geschlossene Position gelangen und dabei ihren Durchmesser entsprechend verringern, und
- einen fünften Extraktionsschritt, wobei die Mittelachse (2) gegebenenfalls unter Verwendung des Griffs (10) weiter nach außen gezogen wird, wobei das Handgerät zum Aufweiten thermoplastischer Rohre aus dem aufgeweiteten Ende (15) des Rohrs (13) herausgezogen wird und für einen weiteren Zyklus bereit bleibt.

11. Verfahren zum Aufweiten thermoplastischer Rohre nach Anspruch 10, umfassend, ergänzend und gleichzeitig zu jedem der vorhergehenden Schritte, einen zusätzlichen Schritt des Erhitzens der Außenseite des Endes des Rohrs (13) mittels einer Heizvorrichtung (14).

## Revendications

1. Dispositif manuel pour évaser des tubes thermoplastiques **comprenant** :
- une pluralité de plaques latérales courbées (1) aptes à former un élément cylindrique creux, terminé à une extrémité par un chanfrein (12), pourvues intégralement sur leur face intérieure d'une ou plusieurs fourches latérales (4),
- un axe central (2) disposé longitudinalement à l'intérieur de l'élément cylindrique creux et émergeant de l'extrémité opposée au chanfrein, muni d'au moins deux fourches centrales (3) solidaires de l'axe central (2) à des longueurs différentes dudit axe central,
- une pluralité de bielles (5) reliant, au moyen de deux axes de rotation (7) dans chaque bielle (5), les fourches latérales (4) des plaques latérales courbées (1) aux fourches centrales (3) solidaires de l'axe central (2),
- une étoile de liaison (6), munie d'un bras pour chaque plaque latérale courbée (1) existante, percée d'un alésage central pour le passage et le déplacement de l'axe central (2), et dont les extrémités extérieures des bras débouchent à travers des fentes (11) judicieusement ménagées dans les plaques latérales courbées (1) et dimensionnées adéquatement pour permettre le déplacement des plaques latérales courbées (1) par rapport aux bras de l'étoile de liaison (6), cette étoile de liaison (6) étant située à proximité de l'extrémité opposée aux chanfreins (12) des plaques latérales courbées (1), de telle sorte que les fourches centrales (3) solidaires de l'axe central (2) restent à l'intérieur du cylindre formé par les plaques latérales courbées (1), sous l'étoile de liaison (6),
- une butée de déplacement axial (9) solidaire de l'axe central (2), située au-dessus de l'étoile de liaison (6),
l'axe central (2) étant apte à se déplacer axialement suivant la hauteur du cylindre formé par les plaques latérales courbées (1), ce déplacement étant limité par le contact de la butée (9) ou de la fourche centrale (3) située la plus proche de l'étoile de liaison (6), avec ladite étoile de liaison (6).

2. Dispositif manuel pour évaser des tubes thermoplastiques selon la revendication 1, **dans lequel** le nombre de plaques latérales courbées (1) est de trois.

3. Dispositif manuel pour évaser des tubes thermoplastiques selon l'une quelconque des revendications précédentes, **dans lequel,** dans une position fermée des plaques latérales courbées (1), l'axe central (2) est décalé vers l'extérieur, de sorte que la fourche centrale (3) située plus près de l'étoile de liaison (6) entre en contact avec ladite étoile de liaison (6), et les fourches centrales (3), par l'intermédiaire des bielles (5) qui les relient, entraînent les fourches latérales (4) vers une position plus proche de l'axe central (2), provoquant la fermeture des plaques latérales courbées (1) vers l'intérieur, formant un élément cylindrique creux de diamètre minimal, de dimensions idéales pour l'insertion à l'intérieur de l'extrémité du tube (13) sans évasement.

4. Dispositif manuel pour évaser des tubes thermoplastiques selon l'une quelconque des revendications 1 et 2, **dans lequel,** dans une position ouverte des plaques latérales courbées (1), l'axe central (2) est décalé vers l'intérieur, de sorte que la butée (9) entre en contact avec l'étoile de liaison (6), et les fourches centrales (3), par l'intermédiaire des bielles (5) qui les relient, entraînent les fourches latérales (4) vers une position éloignée de l'axe central (2), provoquant l'ouverture des plaques latérales courbées (1) ensemble vers l'extérieur, formant un élément cylindrique creux avec un diamètre maximal, de dimensions idéales pour obtenir l'extrémité évasée (15) de l'extrémité du tube (13).

5. Dispositif manuel pour évaser des tubes thermoplastiques selon l'une quelconque des revendications précédentes, **dans lequel** les jonctions entre les plaques latérales courbées (1) et les fourches latérales (4) sont réalisées au moyen de fixations mécaniques classiques (8).

6. Dispositif manuel pour évaser des tubes thermoplastiques selon l'une quelconque des revendications 1 à 4, **dans lequel** les jonctions entre les plaques latérales courbées (1) et les fourches latérales (4) sont réalisées par soudage.

7. Dispositif manuel pour évaser des tubes thermoplastiques selon l'une quelconque des revendications précédentes, **dans lequel** les jonctions entre l'axe central (2), les fourches centrales (3) et la butée (9) ont une position réglable le long de l'axe central (2).

8. Dispositif manuel pour évaser des tubes thermoplastiques selon l'une quelconque des revendications 1 à 6, **dans lequel** les jonctions entre l'axe central (2), les fourches centrales (3) et la butée (9) sont fixes.

9. Dispositif manuel pour évaser des tubes thermoplastiques selon l'une quelconque des revendications précédentes, **dans lequel** l'axe central (2) comporte, à son extrémité extérieure, une poignée intégrée (10).

10. Procédé pour évaser des tubes thermoplastiques avec un dispositif manuel pour évaser des tubes thermoplastiques selon l'une quelconque des revendications précédentes, **comprenant**
- une première étape de chauffage de l'extrémité du tube (13) au moyen d'un dispositif de chauffage (14),
- une deuxième étape d'insertion du dispositif manuel d'évasement des tubes thermoplastiques, en position fermée des plaques latérales courbées (1), à l'intérieur de l'extrémité du tube (13), jusqu'à ce que l'extrémité du tube (13) vienne en butée contre les extrémités de l'étoile de liaison (6) qui s'étendent à l'extérieur des plaques latérales courbées (1) à travers les fentes (11),
- une troisième étape d'expansion, dans laquelle l'axe central (2) continue d'être poussé, à l'aide de la poignée (10) le cas échéant, jusqu'à ce que la butée (9) vienne en contact avec l'étoile de liaison (6), provoquant le passage des plaques latérales courbées (1) de la position fermée à la position ouverte, avec leur expansion correspondante vers l'extérieur,
- une quatrième étape de fermeture, dans laquelle l'axe central (2) est tiré vers l'extérieur, à l'aide de la poignée (10) le cas échéant, jusqu'à ce que la fourche centrale (3) située au plus près de l'étoile de liaison (6) entre en contact avec ladite étoile de liaison (6), provoquant le passage des plaques latérales courbées (1) de la position ouverte à la position fermée, avec leur diminution correspondante de diamètre, et
- une cinquième étape d'extraction, dans laquelle l'axe central (2) continue d'être tiré vers l'extérieur, à l'aide de la poignée (10) le cas échéant, en entraînant le dispositif manuel d'évasement de tubes thermoplastiques à l'extérieur de l'extrémité évasée (15) du tube (13), le laissant prêt pour un autre cycle.

11. Procédé d'évasement de tubes thermoplastiques selon la revendication 10, comprenant, complémentairement et simultanément à l'une quelconque des étapes précédentes, une étape supplémentaire de chauffage de l'extérieur de l'extrémité du tube (13) au moyen d'un dispositif de chauffage (14).
